# EUROPEAN PATENT SPECIFICATION

(11) **EP 0 669 155 B1**
(45) Date of publication and mention of the grant of the patent: **06.05.1998**
(21) Application number: 95200441.4
(22) Date of filing: 22.02.1995
(51) Int. Cl.: B01D 53/00, B01D 53/84, B01D 53/85

(54) **Method for biologically purifying gas streams**
Verfahren zur biologischen Reinigung von Gasströmen
Méthode pour la purification biologique de courants de gaz

(30) Priority: 23.02.1994 NL 9400273
(43) Date of publication of application: 30.08.1995
(73) Proprietor: Stork Engineers & Contractors B.V., 1043 NT Amsterdam (NL); Bergschenhoek Civiele Techniek B.V., NL-2661 AC Bergschenhoek (NL)
(72) Inventor: Paul, Pieter Gerardus, NL-3621 GH Breukelen (NL); Bulsing, Peter, NL-2861 WC Bergambacht (NL)
(74) Representative: Smulders, Theodorus A.H.J., Ir.

(56) References cited:
- EP-A- 0 329 643
- EP-A- 0 414 095
- DE-A- 3 628 030
- DE-C- 4 001 558
- PROCEEDINGS 86TH ANNUAL MEETING OF THE AIR & WASTE MANAGEMENT ASSIOCIATION, vol. 3B, June 1993 DENVER, pages 1-16, MAKOTO SHODA 'Oxidation Characteristics of Sulfur-containing Gases by Pure or Mixed Cultures of Bacteria Isolated from Peat and Their Application to Removal of Exhaust Gas from a Night Soil Treatment Plant'

## Description

The invention relates to a method for purifying gas streams utilizing biological purification methods.

Biological purification of gas streams and more particularly of gas streams containing volatile pollutants, such as volatile sulfur compounds (dimethyl sulfide, H₂S, etc.), fatty acids, hydrocarbons and the like, has long been known. This purification technique is based on the microbiological breakdown and conversion of pollutants occurring in the off-gas.

To render the pollutants accessible to the microorganisms, they must be absorbed or adsorbed. For this purpose, different techniques are available and presently three fundamentally different process designs are distinguished: biofilters, biowashers (or bioscrubbers) and trickling filters.

Biological purification techniques can be employed for the biological breakdown of organic decomposable components, which include: aldehydes, alcohols, ketones, carboxylic acids, esters, ethers, alkenes, a number of aromatic compounds, a number of terpenes, heterocyclic compounds and organic compounds with an -NH2 group (e.g. amines), an -SH group (e.g. mercaptans) or a halogen group. These techniques are also suitable for removing inorganic compounds such as H₂S and NH₃.

In the case of biofiltration, the polluted gas is passed through a packed bed, the biofilter, which is filled with biologically active filter material (humus, compost, peat), optionally mixed with a coarser, more or less inert fraction (bark, heath, plastic, lava, etc.). The activity of the filter material is based on the natural presence of microorganisms in the filter material which are capable of decomposing the pollutants.

Depending on the off-gas to be treated, the biofilter can be inoculated with adapted organisms. The filter is humidified and, if necessary, nutrients or buffering additives can be added. Any residual products which have been formed in the filter bed can optionally be removed by extreme periodic humidification. The maximum treatable pollutant concentration in the off-gases is limited by the oxygen transfer.

In the literature much has already been published about biofilters, more particularly about the nature of the filter materials to be used. In European patent applications EP-A-80747 and EP-A-142872, biofilter systems are described which are based on a fraction of active material and an inactive fraction, where the latter fraction may, if so desired, have a different particle size than the active fraction.

A trickling (bio)filter typically consists of a column which is filled with a packing material having a relatively large particle diameter (a few cm). In the packed column, microbial flora are present as a biofilm around the packing material. Spray water is passed over the packing. A transfer of substance takes place from the polluted gaseous phase to the biofilm, where the transferred components are broken down by the microorganisms. Sludge flakes which come off can, if necessary, be separated in a settling tank. Additives and nutrients are added to the spray water in order to provide an optimum natural environment (pH, nutrients) for the microorganisms.

Both systems of biological purification of gas streams have a number of advantages and a number of limitations. In the case of biofiltration, these limitations reside mainly in the removal efficiency and the concentration level and the nature of the components which can be removed. When trickling filters are used, limitations arise in the transport of substances to the liquid phase, as a result of which the amount of gas that can be purified per unit volume is limited. It also appears that it is difficult to remove compounds which are less amenable to biodegradation, such as chlorinated hydrocarbons, from gas streams containing a number of components.

In view of the disadvantages of the various systems, it has been proposed to use two- or multi-stage biofilters, or combinations of biofilters with a physicochemical pretreatment. However, these systems are relatively expensive and may give rise to considerable residual streams (waste water and/or solid (chemical) waste).

It has also been previously proposed to combine various biological and other purification systems. DE-A 3628030 describes a system consisting of a three-stage biophysical purification system where, utilizing a complicated process control, a gas stream is first separated into a number of components, then a part of the components is treated in a trickling filter and another part in a biofilter, while also a number of streams are recirculated.

The object of the invention is to provide a simple and uncomplicated system for biologically purifying polluted gas streams, in which at least a part of the disadvantages outlined above do not arise, and more particularly to provide a system which is suitable for purifying gas streams containing complex mixtures of pollutants, without giving rise to acidification or other adverse effects.

The invention is based on the surprising insight that the purification of gas streams which are otherwise difficult to purify biologically can be effected efficiently and simply through a combination of a biofilter and a trickling filter, the trickling filter being based on a support material having provided thereon one or more microorganisms of the genus *Hyphomicrobium*, which are suitable for decomposing organic sulfur compounds.

A suitable strain of the desired microorganism can be isolated from waste water sludge (activated sludge) by means of enrichment techniques, using a nutrient medium which contains dimethyl sulfide, for instance as described in the article by A. Pol et al. to be mentioned hereinafter.

More particularly, in the trickling filter a strain of *Hyphomicrobium* is used which is known as *Hyphomicrobium* VS, a sulfur-decomposing microorganism which is described in A. Pol et al, Isolation of a dimethyl sulfide-utilizing *Hyphomicrobium* species and its application in biofiltration of polluted air, Biodegradation, **5**, pp. 105-112, 1995.

In accordance with the invention, it is possible, depending on the nature of the gas stream to be purified, to use either a trickling filter or a biofilter first. Surprisingly, it has been found that by the combined use of the two systems a considerably improved removal efficiency of malodorous components is obtained. Especially in the treatment of complex mixtures, the combined system is found to work considerably better than each of the separate systems.

In the combined application of a biofilter and a trickling filter, the water coming from the two filters is preferably recirculated over the trickling filter. This prevents the necessity of a separate waste water purification, without entailing an unacceptably much higher load of the system.

The most important advantage of the proposed combined biological systems is that much stabler subprocesses are obtained, as a result of which the removal efficiency increases markedly and remains stable in the long term.

With the combined system of biotrickling filter and biofilter, first substances causing a pH reduction in the filter, such as ammonia and hydrogen sulfide, are removed in the biotrickling filter under specified conditions (pH, T, nutrients), whereafter other specific volatile odorous substances (volatile sulfur compounds (VSC) and volatile organic substances (VOS)) are effectively removed in the biofilter.

With the combined system of biofilter and biotrickling filter, properly capturable and decomposable organic substances are removed in the biofilter, whereafter specific recalcitrant compounds, such as, for instance, dimethyl sulfide (DMS), are effectively removed in the biotrickling filter under properly controllable conditions.

Another very important advantage of the combisystem where in the biotrickling filter use is made of a *Hyphomicrobium* strain, for instance *Hyphomicrobium* VS, isolated from activated sludge is that, for the purpose of treating volatile sulfur compounds, including H₂S, it allows working at a neutral pH, as opposed to existing trickling filter systems where H₂S must be removed at lower pH values.

According to the invention, in the trickling filter a sulfur-decomposing microorganism is used which belongs to the genus *Hyphomicrobium*, more particularly *Hyphomicrobium* VS. It has been found that these microorganisms are highly suitable for removing volatile sulfur compounds, such as DMS, H₂S, methyl mercaptan, dimethyl disulfide, dimethyl trisulfide and CS₂ from gas streams. More particularly, it has been found that such sulfur-decomposing microorganisms of the genus *Hyphomicrobium* are highly suitable for decomposing malodorous sulfur compounds, which may be present in a gas in very low concentrations. By the use of these microorganisms in the system combining a biofilter and a trickling filter, it is possible to decompose these compounds to a concentration below the limit of olfaction without using complicated purification systems.

An important advantage of these biological combisystems is that produced drain water from the biofilter can first be neutralized in a common water conditioning compartment and then be degraded in the trickling filter. The drain of organic substances is thereby reduced considerably.

An additional advantage is that the trickling filter bed provides a highly efficient humidification of the off-gases. A separate humidifier unit is not necessary.

The filters to be used in accordance with the invention substantially correspond with the biofilters and trickling filters known from the literature and from practice. Where biofilters are concerned, reference can be made to the above-mentioned European patent applications EP-A-80747 and EP-A-142872. Trickling filters are based on a natural or synthetic support material, such as lava rock, cork, bark, ceramic and plastic materials, having provided thereon one or more suitable microorganisms.

The invention is suitable in particular for treating gas streams containing such volatile sulfur compounds, such as gas streams coming from the chemical industry, the petrochemical industry, the dairy industry, waste water treatments, sludge processing, the paper industry, garbage dumps, composting, compost preparation for mushroom cultures and the like.

The invention will now be explained with reference to two drawings, in which the two combisystems mentioned are represented.

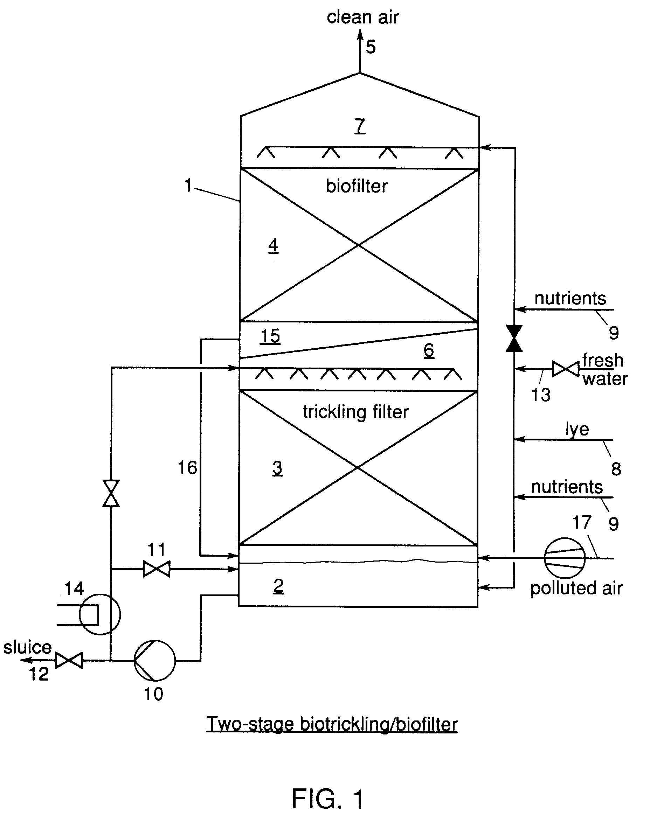

Fig. 1 shows a possible embodiment of a biotrickling-biofilter combisystem. The filter housing 1 is made up of a water treatment chamber 2 for conditioning spray water for the trickling bed 3. The polluted off-gases are introduced into the water treatment chamber 2 at the top thereof through pipe 17 and traverse in succession a trickling filter bed 3 and a biofilter bed 4. The purified air is discharged to the atmosphere through discharge 5, optionally by way of a measuring and sampling device. Disposed above the trickling filter bed 3 and the biofilter bed 4 are spraying means 6 and 7, respectively. Spraying means 6 is fed continuously or discontinuously with conditioned water from the water treatment chamber 2. To control the acidity and the optimum nutrient concentration, solution of sodium hydroxide 8 and nutrients 9, respectively, are supplied. By means of water pump 10 the spray water is raised to the spraying means 6 and also the contents of the water treatment chamber 2 are mixed by way of a return pipe 11. The optimum content of inorganic salts is maintained by means of a sluice 12 and a fresh water supply 13. The spray water is maintained at the proper temperature by means of heat exchanger 14.

If necessary, the moisture content in the biofilter bed 4 can be increased by metering fresh water by way of fresh water supply 13 and spraying means 7. If necessary, nutrients 9 can be added to the spray water.

The drain water from the biofilter bed 4 is collected under the bed in water sump 15 and fed through discharge pipe 16 to the water treatment chamber 2.

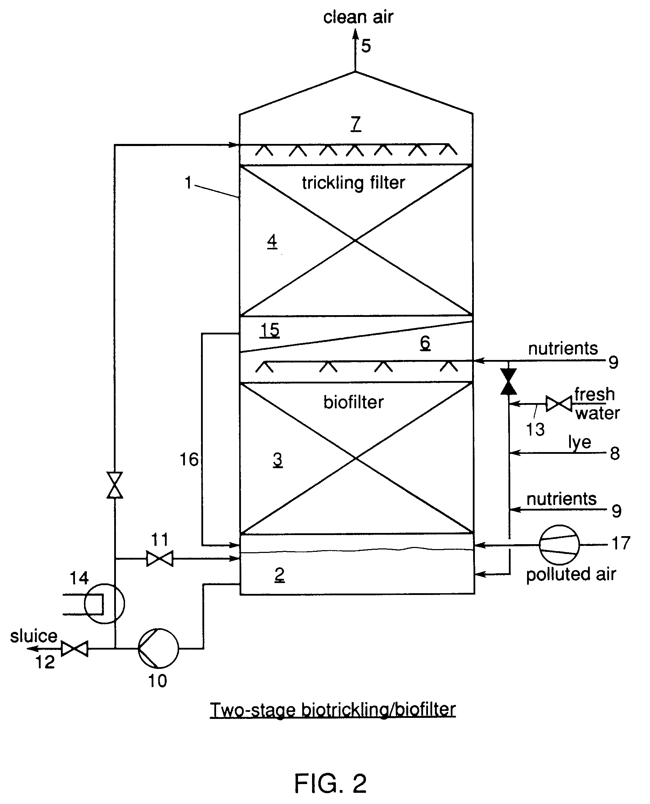

Fig. 2 shows a possible embodiment of biofilter-biotrickling filter combisystem. The filter housing 1 is made up of a water treatment chamber 2 for conditioning spray water for trickling bed 4. The polluted off-gases are introduced into the water treatment chamber 2 at the top thereof through pipe 17 and traverse in succession a biofilter bed 3 and a trickling filter bed 4. The purified air is discharged to the atmosphere through discharge 5, optionally by way of a measuring and sampling device. Disposed above the biofilter bed 3 and the trickling filter bed 4 are spraying means 6 and 7, respectively.

If necessary, the moisture content in the biofilter bed 3 can be increased by metering fresh water by way of fresh water supply 13 and spraying means 7. If necessary, nutrients 9 can be added to the spray water.

Spraying means 7 is supplied with conditioned water from the water treatment chamber 2. To control the acidity and the optimum nutrient concentration, solution of sodium hydroxide 8 and nutrients 9, respectively, are supplied. By means of water pump 10 the spray water is raised to the spraying means 6 and also the contents of the water treatment chamber 2 are mixed by way of a return pipe 11. The optimum content of inorganic salts is maintained by means of a sluice 12 and a fresh water supply 13. The spray water is maintained at the proper temperature by means of heat exchanger 14.

The spray water from the biofilter bed is collected under the bed in water sump 15 and is fed through discharge pipe 16 to the water treatment chamber 2.

The method according to the invention will now be explained in and by the following examples.

### EXAMPLES

### Example 1

An apparatus according to the invention, consisting of a combisystem of a biofilter and a trickling filter in series, as described in Fig. 2, was fed continuously with a synthetic waste gas of a baker's yeast fermentation. The biofilter bed consisted of a mixture of bark and compost of the make VAMFIL® and the trickling filter contained lava rock as support material. The biofilter was inoculated with activated sludge from a waste water purification plant. The trickling filter bed was inoculated with a DMS decomposing methylotrophic organism *Hyphomicrobium* VS, isolated from activated sludge.

The waste gas contained 100 mg/m³ of hydrocarbons (mainly ethanol and further higher alcohols and aldehydes) and 4 mg/m³ dimethyl sulfide (DMS). The temperature was 30°C. The hydrocarbons were removed in the biofilter for a test period of about 3 months with an efficiency of >90% at a surface load of 100 m³/m²/hour. The DMS removal in the biofilter was <20%. In the trickling filter, DMS was removed at a pH of 7 to below the detection limit (0.025 mg/m³ or 0.01 ppm). The total efficiency of the combisystem was >98% for hydrocarbons, >99% for DMS and >99.9% for odor.

### Example 2

An apparatus according to the invention, consisting of a combisystem of a trickling filter and a biofilter in series, as described in Fig. 1, was fed continuously with a waste gas of a sewage treatment plant. The trickling filter contained lava rock as support material and the biofilter bed consisted of a mixture of bark and compost of the make VAMFIL®. The biofilter was inoculated with activated sludge from a waste water purification plant. The trickling filter bed was inoculated with a DMS decomposing methylotrophic organism *Hyphomicrobium* VS, isolated from activated sludge.

The waste gas contained 140 mg/m³ of H₂S and 20 ppm of other odorous components (hydrocarbons such as indol, skatol and aldehydes and mercaptans). The temperature of the off-gas varied between 15 and 25°C. The temperature of the spray water of the trickling bed was maintained at 30°C and the pH was ajusted to pH = 7. The surface load employed varied between 100 and 200 m³/m²/hour.

The removal of H₂S during a test period of about 3 months was on average >99.9%, that of hydrocarbons >90% and the total odor reduction was >95%.

## Claims

1. A method for removing volatile pollutants from gas streams, comprising the treatment of said gas streams utilizing a combination of a biofilter and a trickling filter, the trickling filter being based on a support material having provided thereon one or more microorganisms of the genus *Hyphomicrobium*, which are suitable for decomposing organic sulfur compounds.

2. A method according to claim 1, wherein the biofilter is based on an organic support material, optionally in combination with an inert filler.

3. A method according to claim 2, wherein the organic support material is selected from compost, peat, humus, and mixtures thereof.

4. A method according to claims 1-3, wherein the gas stream to be purified is first passed through the biofilter and then through the trickling filter.

5. A method according to claims 1-3, wherein the gas stream to be purified is first passed through the trickling filter and then through the biofilter.

6. A method according to claim 5, wherein the biofilter is irrigated with an aqueous solution, any excess of aqueous solution coming from the biofilter being fed to the trickling filter.

7. A method according to claim 5 or 6, wherein a gas is treated which contains relatively much H₂S and few odorous components.

8. A method according to claim 4, wherein a gas is purified which contains relatively few sulfur-containing components and relatively many hydrocarbons and/or volatile fatty acids.

## Patentansprüche

1. Verfahren zum Entfernen flüchtiger Verunreinigungen aus Gasströmen, welches die Behandlung der Gasströme unter Verwendung einer Kombination aus einem Biofilter und einem Tropffilter, wobei das Tropffilter auf einem Hilfsmaterial basiert, auf dem ein oder mehrere Mikroorganismen der Gattung Hyphomicrobium vorgesehen sind, die zum Zersetzen von schwefeligen Zusammensetzungen geeignet sind.

2. Verfahren nach Anspruch 1, bei dem das Biofilter auf einem organischen Hilfsmaterial basiert, wahlweise in Kombination mit einem Inert-Filter.

3. Verfahren nach Anspruch 2, bei dem das organische Hilfsmaterial unter Kompost, Torf, Humus und Mischungen derselben ausgewählt ist.

4. Verfahren nach den Ansprüchen 1-3, bei dem der zu reinigende Gasstrom zunächst durch das Biofilter und anschließend durch das Tropffilter geleitete wird.

5. Verfahren nach einem der Ansprüche 1-3, bei dem der zu reinigende Gasstrom erst durch das Tropffilter und anschließend durch das Biofilter geleitet wird.

6. Verfahren nach Anspruch 5, bei dem das Biofilter mit einer wäßrigen Lösung befeuchtet wird, wobei jeglicher Überschuß der vom Biofilter kommenden wäßrigen Lösung dem Tropffilter zugeführt wird.

7. Verfahren nach Anspruch 5 oder 6, bei dem ein Gas behandelt wird, das relativ viel H₂S und wenige geruchsintensive Bestandteile enthält.

8. Verfahren nach Anspruch 4, bei dem ein Gas gereinigt wird, das relativ wenige schwefelhaltige Bestandteile und relativ viele Kohlenwasserstoffe und/oder flüchtige Fettsäuren enthält.

## Revendications

1. Procédé pour éliminer les matières polluantes volatiles dans des courants de gaz, comprenant le traitement desdits courants de gaz au moyen d'une combinaison d'un biofiltre et d'un filtre à dégouttement, le filtre à dégouttement étant à base d'un matériau support sur lequel sont disposés un ou plusieurs microorganismes appartenant au genre *Hyphomicrobium*, qui conviennent à la décomposition de composés organiques du soufre.

2. Procédé selon la revendication 1, dans lequel biofiltre est à base d'un matériau support organique, éventuellement en combinaison avec une charge inerte.

3. Procédé selon la revendication 2, dans lequel le matériau support organique est choisi parmi le compost, la tourbe, l'humus et leurs mélanges.

4. Procédé selon les revendications 1 à 3, dans lequel le courant de gaz à purifier traverse d'abord le biofiltre et traverse ensuite le filtre à dégouttement.

5. Procédé selon les revendications 1 à 3, dans lequel le courant de gaz à purifier traverse d'abord le filtre à dégouttement et traverse ensuite le biofiltre.

6. Procédé selon la revendication 5, dans lequel le biofiltre est irrigué avec une solution aqueuse, tout excès de solution aqueuse provenant du biofiltre étant envoyé vers le filtre à dégouttement.

7. Procédé selon la revendication 5 ou 6, dans lequel on traite un gaz qui contient une quantité relativement importante de H₂S et peu de composants odorants.

8. Procédé selon la revendication 4, dans lequel on purifie un gaz qui contient relativement peu de composants soufrés et une quantité relativement importante d'hydrocarbures et/ou d'acides gras volatils.
